# EUROPEAN PATENT APPLICATION

(11) **EP 4 516 422 A1**
(43) Date of publication of application: **05.03.2025**
(21) Application number: 23795877.2
(22) Date of filing: 20.02.2023
(51) Int. Cl.: B21D 51/26, B21D 22/28, B65D 25/20, G05B 19/418

(54) **CAN BODY MANUFACTURING SYSTEM AND METHOD FOR MANUFACTURING CAN BODY**

(30) Priority: 28.04.2022 JP 2022074314
(71) Applicant: Toyo Seikan Group Holdings, Ltd., Shinagawa-ku Tokyo 141-8627 (JP)
(72) Inventor: SUDO, Jun, Tokyo 141-8627 (JP); NOBUI, Hiroyuki, Tokyo 141-8627 (JP)
(74) Representative: Haseltine Lake Kempner LLP
(86) International application number: PCT/JP2023/006027
(87) International publication number: WO 2023/210129

(57) **Abstract**

A technical problem is to improve productivity of a manufacturing system. The problem is solved by a can body manufacturing system according to the present invention including a can barrel forming apparatus, a printing apparatus, and a branch conveyor, wherein the can barrel forming apparatus is an apparatus for forming can barrels, the printing apparatus is to perform printing on an outer surfaces of the can barrels and includes a printing apparatus inlet conveyor, the branch conveyor is arranged in a post-process of the can barrel forming apparatus and includes a flow path switching unit, a first branch of the branch conveyor is connected to the printing apparatus inlet conveyor connected to the printing apparatus and is connected to a printed can manufacturing section, a second branch of the branch conveyor is connected to a bypass inlet conveyor not passing through the printing apparatus and is connected to a plain can manufacturing section, and printed cans manufactured by the printed can manufacturing section and plain cans without being printed manufactured by the plain can manufacturing section are producible by switching the flow path switching unit.

## Description

### Technical Field

The present invention relates to a can body manufacturing system and a can body manufacturing method for beverage cans or the like.

### Background Art

Can bodies are generally used as containers for liquid contents such as drinking water, and are classified into various types such as plain cans, printed cans, resin-coated cans, DI (Draw & Ironing) cans, two-piece cans, three-piece cans, steel cans, aluminum cans, welded cans, and solder cans, depending on manufacturing processes, materials, and the like. In addition, the can bodies are classified into printed cans where printing is directly performed on can barrels and plain cans where no printing is performed. Labels or the like may be attached to the plain cans later (Patent Documents 1 and 2). The printed cans are cans where printing is directly performed on can barrels (Patent Document 3).

Although the difference between the plain cans and the printed cans appears to be merely a difference in the presence or absence of printing, in practice, the plain cans may require different manufacturing processing from the printed cans. For example, the printed cans require a printing machine, and a process in which, after printing by the printing machine, a finishing varnish is applied to protect the printed surface is included. On the other hand, the plain cans do not require a printing machine, and only a process of applying a finishing varnish is performed. For the printed cans, when changing a setting of the printing machine (changing to printing for another product), an operator needs to stop the line, and during the stop, the manufacturing of cans is delayed or the like, resulting in lowering of the productivity of the manufacturing line.

### Citation List

### Patent Literature

Patent Document 1: JP 2009-145370 A
Patent Document 2: JP H03-111241 A
Patent Document 3: JP H03-7059 A

### Summary of Invention

### Technical Problem

An object of the present invention is to improve the productivity of a manufacturing line.

### Solution to Problem

In order to achieve such an object, a manufacturing system according to the present invention has the following configuration.

A can body manufacturing system including: a can barrel forming apparatus, a printing apparatus, and a branch conveyor, wherein the can barrel forming apparatus is an apparatus configured to form can barrels, the printing apparatus is configured to perform printing on outer surfaces of the can barrels and includes a printing apparatus inlet conveyor, the branch conveyor is arranged in a post-process of the can barrel forming apparatus and includes a flow path switching unit, a first branch of the branch conveyor is connected to the printing apparatus inlet conveyor connected to the printing apparatus and is connected to a printed can manufacturing section, a second branch of the branch conveyor is connected to a bypass inlet conveyor not passing through the printing apparatus and is connected to a plain can manufacturing section, and printed cans manufactured by the printed can manufacturing section and plain cans without printing manufactured by the plain can manufacturing section are producible by switching the flow path switching unit.

Further, in order to achieve the above object, a can body manufacturing method according to the present invention has the following configuration.

A can body manufacturing method including: forming can barrels by a can barrel forming apparatus wherein the can barrel forming apparatus, a printing apparatus, and a branch conveyor are included, the can barrel forming apparatus being configured to form can barrels, the printing apparatus being configured to perform printing on outer surfaces of can barrels and including a printing apparatus inlet conveyor, the branch conveyor being arranged in a post-process of the can barrel forming apparatus and including a flow path switching unit, a first branch of the branch conveyor being connected to the printing apparatus inlet conveyor connected to the printing apparatus and being connected to a printed can manufacturing section, a second branch of the branch conveyor being connected to a bypass inlet conveyor not passing through the printing apparatus and being connected to a plain can manufacturing section; and switching the flow path switching unit to the first branch or the second branch, wherein manufacturing of printed cans passing through the printed can manufacturing section by selection of the first branch and manufacturing of a plain can without printing passing through the plain can manufacturing section by selection of the second branch are performed by switching the flow path switching unit.

### Advantageous Effects of Invention

The productivity of the manufacturing system can be improved.

### Brief Description of Drawings

FIG. 1 is an explanatory diagram of a can body manufacturing system for a DI can according to Example 1.
FIG. 2 is an explanatory view of a printing apparatus and a varnisher.
FIG. 3 is an explanatory diagram of a can body manufacturing system for a resin-coated can of Example 2.
FIG. 4 is an explanatory diagram of a can body manufacturing system of Example 3.
FIG. 5-1 is an explanatory diagram of switching by a movable guide of a branch conveyor.
FIG. 5-2 is an explanatory diagram of switching by the movable guide of the branch conveyor, in which (A) to (E) represent a time series order.
FIG. 6 is an explanatory diagram of branch switching by conveying speed control of a branch conveyor, in which (A) and (B) represent a time series order.
FIG. 7-1 is an explanatory diagram of assembly of a can body manufacturing system, in which (A) is an explanatory diagram illustrating a state of the can body manufacturing system before assembly. (B) is an explanatory diagram of a parallel arrangement.
FIG. 7-2(C) is an explanatory diagram of a series arrangement.
FIG. 8 is an explanatory diagram of a three-dimensional parallel arrangement of a necking section and a palletizer section of the can body manufacturing system.
FIG. 9 is an explanatory diagram of a three-dimensional series arrangement of the necking section and the palletizer section of the can body manufacturing system.

### Description of Embodiments

Hereinafter, embodiments of the present invention will be described with reference to the drawings. In the following description, the same reference numerals in different drawings denote elements having the same function, and redundant descriptions with regard to each drawing will be omitted as appropriate.

The present invention focuses on a system for manufacturing printed cans and plain cans, and can be applied regardless of a structure, a material, or the like of the cans.

The present invention can be applied to, for example, cans formed of hybrid materials such as DI (Draw & Ironing) cans mainly made of aluminum and resin-coated cans. In the present invention, the basic members and arrangement of the present invention are common, but the configuration not included in the claims may be different depending on the type of cans. Therefore, Example 1 will be described as an example relating to DI (Draw & Ironing) cans mainly made of aluminum, and Example 2 will be described as an example relating to resin-coated cans. Example 1 and Example 2 illustrate that the present invention includes various aspects.

### <Example 1>

Example 1 is an example of a can body manufacturing system 1 for DI (Draw & Ironing) cans included in the present invention.

### <Can Body Manufacturing System for DI Can>

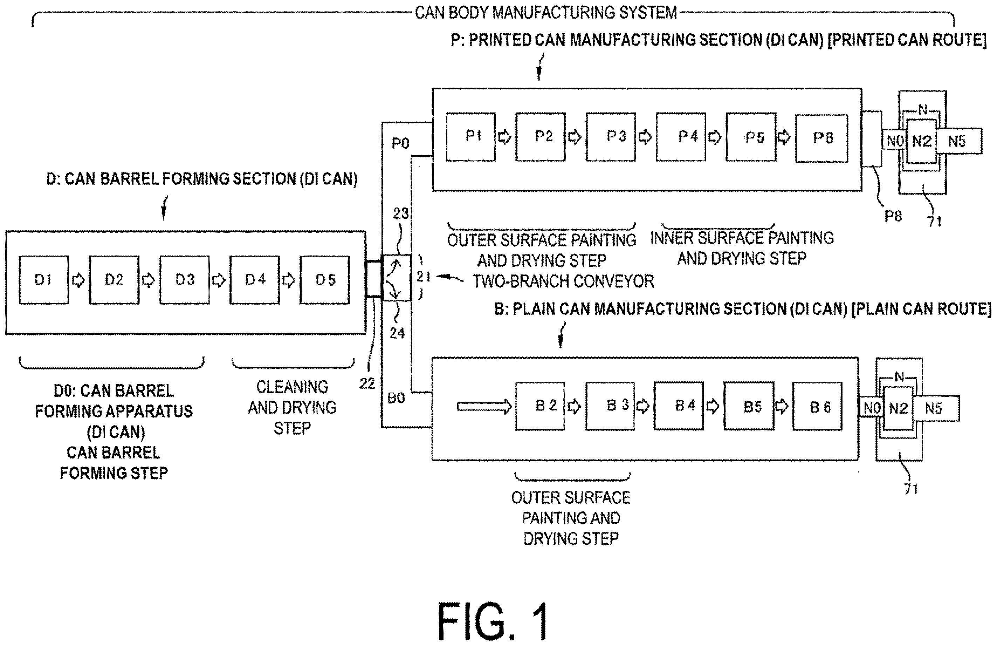

FIG. 1 is an explanatory diagram of a can body manufacturing system 1 for DI cans.

The can body manufacturing system 1 for DI cans includes a can barrel forming section D (DI can) including a can barrel forming apparatus D0 (DI can) for forming at least can barrels.

### <Can Barrel Forming Section (DI Can)>

Manufacturing of DI cans begins with a can barrel forming step. The can barrel forming apparatus D0 (DI can) is arranged in the can barrel forming section D (DI can) and forms can barrels. The can barrel forming section D (DI can) is a conveyor including at least the can barrel forming apparatus D0 (DI can) on its flow path.

The can barrel forming apparatus D0 (DI can) includes a cupping pressing machine D1. The cupping pressing machine D1 is an apparatus for punching cup-shaped can materials from an aluminum plate material coated with lubricant. Next, the cup-shaped can materials are sent to a body maker D2, in which the can barrels are stretched thin by drawing and ironing and bottoms are formed. Upper unnecessary portions of the drawn and ironed can barrels are cut off by a trimmer D3, and the heights of the can barrels are aligned.

An apparatus other than the can barrel forming apparatus D0 (DI can) may be provided on the flow path of the can barrel forming section D (DI can). For example, examples of the apparatus other than the can barrel forming apparatus D0 (DI can) include a washer D4 and an oven D5. For example, the can barrels cut by the trimmer D3 are sent to the washer D4, in which unnecessary components such as aluminum powder and coolant generated during forming are removed by cleaning. The cleaned can barrels are sent to the oven D5 and dried therein. As such, during the conveyance in the can barrel forming section D (DI can), the can barrels may be processed by the apparatus group applied in the cleaning and drying steps.

In a can body manufacturing system of the related art, even in the case of manufacturing plain cans, after can barrels are formed by a can barrel forming section (DI can) in the same manner as printed cans, the can barrels pass through a printing apparatus without being printed, and varnish is applied to outer surfaces of the can barrels by a varnisher. For this reason, while the printing apparatus is stopped for a design changing operation, the plain cans cannot also be produced. Therefore, in the can body manufacturing system 1 according to Example 1, a branch conveyor 2 is incorporated in a post-process of the can barrel forming section D (DI can), and is connected to a printed can manufacturing section P (DI can) and a plain can manufacturing section B (DI can) in a branching-possible manner, enabling the printed cans and the plain cans to be manufactured. This makes it possible to manufacture plain cans even while the printing apparatus is stopped.

The branch conveyor 2 is arranged in a post-process of processing by the can barrel forming apparatus D0 (DI can). A base conveyor 22 of the branch conveyor 2 is connected to the can barrel forming section D (DI can). One branch (a first branch) 23 of two branches of the branch conveyor 2 is connected to a printing apparatus inlet conveyor P0 connected to a printing apparatus P1. A route connected to the printing apparatus P1 is a printed can manufacturing section P (DI can) for performing printing on an outer surface of the can barrel.

The other branch (a second branch) 24 of two branches of the branch conveyor 2 is connected to a bypass inlet conveyor B0, which does not pass through the printing apparatus P1, and is connected to a plain can manufacturing section B (DI can). A route connected to the bypass inlet conveyor B0 is a plain can manufacturing section B (DI can) for manufacturing plain cans directed to a necking apparatus N2 without passing through the printing apparatus P1.

Can barrels formed by the can barrel forming apparatus D0 (DI can) are sent to either the printing apparatus inlet conveyor P0 or the bypass inlet conveyor B0 when passing through a flow path switching unit 21 of the branch conveyor 2. The first branch 23 of the flow path switching unit 21 is connected to the printing apparatus inlet conveyor P0, and the second branch 24 is connected to the bypass inlet conveyor B0.

As described above, the branch conveyor 2 sends the formed can barrels to either the route of the printed can manufacturing section P (DI can) passing through the printing apparatus inlet conveyor P0 or the route of the plain can manufacturing section B (DI can) passing through the bypass inlet conveyor B0.

The can barrels sent to the printing apparatus inlet conveyor P0 (printed can manufacturing section P) become printed cans with printing on the outer surface of the can barrels.

The can barrels sent to the bypass inlet conveyor B0 (plain can manufacturing section B) become plain cans without printing on the outer surfaces of the can barrels.

Note that the two routes do not have a concept of a main route or a sub-route. In the can body manufacturing system 1 according to Example 1, which route of the branches is mainly used is determined only by a use form and is not directly related to the structure of the can body manufacturing system 1 or the like.

### <Printed Can Manufacturing Section (DI Can)>

In the printed can manufacturing section P (DI can) of FIG. 1, the formed can barrels sent to the printing apparatus inlet conveyor P0 via the branch conveyor 2 pass through a printing apparatus P1, a varnisher P2, a first curing oven P3, an inner surface coater P4, and a second curing oven P5 in this order and are subjected to printing.

The printing apparatus P1 is an apparatus for performing printing on outer surfaces of can barrels. The varnisher P2 is an apparatus for applying varnish for protecting the printed outer surfaces of the can barrels over entire outer surfaces of the can barrels. The first curing oven P3 is an apparatus for drying the printing ink and the applied varnish. The inner surface coater P4 is an apparatus for coating inner surfaces of the can barrels with a coating material. The second curing oven P5 is an apparatus for drying the coating material coated on the inner surfaces of the can barrels.

Regarding the apparatuses provided on the flow path of the printed can manufacturing section P (DI can) of Example 1, the printing apparatus P1 is an indispensable apparatus, but another apparatus may be additionally incorporated or some of the apparatuses may be removed.

### <Lubricator>

The printed can manufacturing section P (DI can) may be provided with a lubricator P6 at the end. The lubricator P6 is an apparatus for applying lubricant, which is required for necking by the necking apparatus N2, to upper ends of the can barrels. The lubricant is an auxiliary agent for assisting in the necking of the upper ends of the can barrels performed in a necking section N. The lubricator P6 may be provided in the necking section N or the necking apparatus N2.

### <Printing Apparatus and Varnisher>

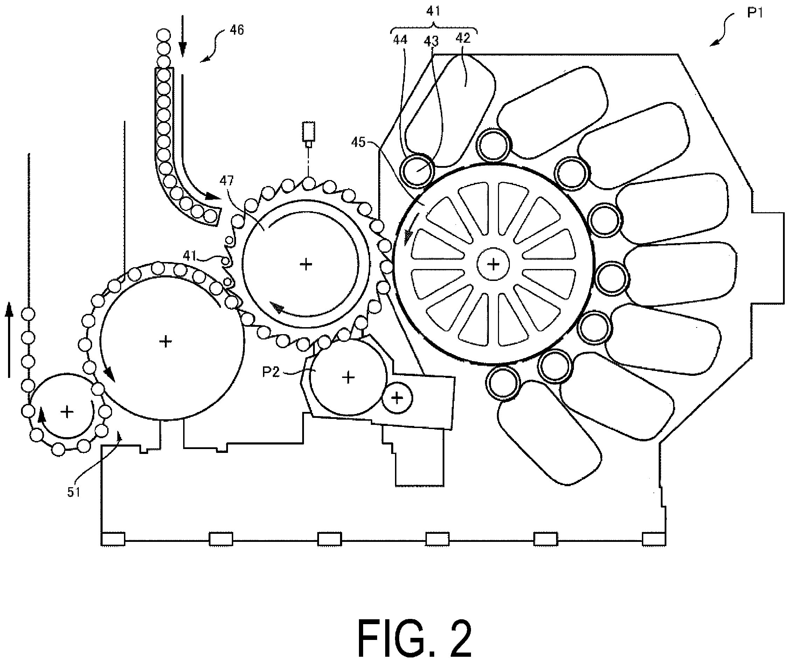

FIG. 2 is an explanatory diagram of the printing apparatus P1 and the varnisher P2. Both the printing apparatus P1 and the varnisher P2 of Example 1 are incorporated into one apparatus. The present invention also includes such an aspect.

The printing apparatus P1 includes an inking unit set 41, a blanket wheel 45, a conveying unit 46, and a mandrel wheel 47. The apparatus includes the varnisher P2 on a downstream side of the mandrel wheel 47, and sends out the printed can barrels toward the first curing oven P3 via a transfer unit 51.

Describing the details of the printing apparatus P1, the inking units 41 of the printing apparatus P1 are apparatuses for supplying ink to printing plates 44. The inking unit set 41 includes a plurality of inking units 41 different for each color of ink. The plurality of inking units 41 are arranged along an outer peripheral surface of the blanket wheel 45, respectively. The inking unit 41 includes an ink supplier 42 for storing a predetermined ink, and a plate cylinder 43 on which the printing plate 44 corresponding to the ink of each ink supplier 42 is mounted.

### <Necking Apparatus>

The necking apparatus N2 is an apparatus for necking upper ends of can barrels. Depending on the type of cans and the presence or absence of varnish application, a lubricant may or may not be required during necking. This point is as described in the above (Lubricator) section.

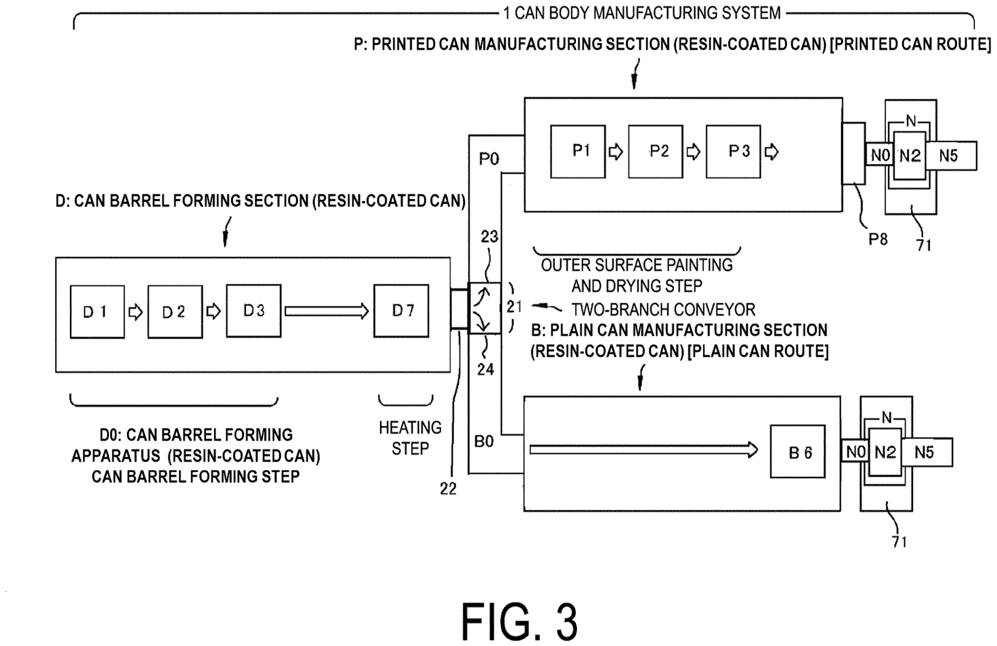

The can barrels sent to the printing apparatus inlet conveyor P0 side by the branch conveyor 2 are sent to the printed can manufacturing section P (DI can) and printed, and then discharged from a printing apparatus outlet conveyor P8 toward the necking section N where the necking apparatus N2 is provided. The printed can barrels are discharged from the printing apparatus outlet conveyor P8 and sent to the necking apparatus N2 where they are necked. The necking apparatus N2 used at this time is dedicated to printed cans. The can barrels sent to the plain can manufacturing section B (DI can) side are necked by a separate necking apparatus N2 from the above necking apparatus. In FIGS. 1 and 3, one necking apparatus N2 is arranged on each of the printed can route and the plain can route, but a plurality of necking apparatuses may be arranged on each route.

Note that the necking section N will be described in detail below.

### <Plain Can Manufacturing Section (DI can)>

The can barrels sent to the plain can manufacturing section B (DI can) side by the branch conveyor 2 do not pass through the printing apparatus P1, so the can barrels become plain cans and leave the plain can manufacturing section B (DI can). The can barrels of the plain cans are not subjected to printing, but are subjected to processing such as application of varnish for protecting outer surfaces of the can barrels.

Since varnish is applied to outer surfaces of the plain cans, a varnisher B2 and a first curing oven B3 are provided on the plain can manufacturing section B (DI can). In addition, similarly to the printed can manufacturing section P (DI can), an inner surface coater B4, a second curing oven B5, and a lubricator B6 are provided. The lubricator B6 may be provided in the necking section N or the necking apparatus N2.

The can barrels (plain cans) discharged from the plain can manufacturing section B (DI can) are sent to the necking section N where they are necked.

### <Branch Conveyor>

The branch conveyor 2 is to separate and send the can barrels formed by the can barrel forming apparatus D0 (DI can) to the printing apparatus inlet conveyor P0 (printed can manufacturing section P (DI can)) and the bypass inlet conveyor B0 (plain can manufacturing section B (DI can)).

The base conveyor 22 at a base of the branch conveyor 2 is connected to the can barrel forming section D (DI can). The first branch 23 of the branch conveyor 2 is connected to the printing apparatus inlet conveyor P0 connected to the printing apparatus P1, and the second branch 24 of the branch conveyor 2 is connected to the bypass inlet conveyor B0, which does not pass through the printing apparatus P1, and is connected to the plain can manufacturing section B (DI can). To which branch (23, 24) the can barrel is to be sent is selected by the flow path switching unit 21. The flow path switching unit 21 will be described in detail below.

### <Example 2>

Example 2 is an example of the can body manufacturing system 1 for resin-coated cans included in the present invention.

### <Can barrel Forming Section D (Resin-Coated Cans)>

FIG. 3 is an explanatory diagram of the can body manufacturing system 1 for resin-coated cans. Materials of the resin-coated cans are resin-coated aluminum plates. Can barrels of the resin-coated cans are formed by the can barrel forming apparatus D0 (resin-coated can) in the can barrel forming step of the can barrel forming section D (resin-coated can). The resin-coated aluminum plates are punched into cup shapes by the cupping pressing machine D1 installed in the can barrel forming apparatus D0 (resin-coated can). Next, the cup-shaped can materials are sent to the body maker D2, in which the can barrels are stretched thin by drawing and ironing without using coolant, and bottoms are formed. Upper unnecessary portions of the drawn and ironed can barrels are cut off by the trimmer D3, and the heights of the can barrels are aligned. Since the can barrels of the resin-coated cans are formed from resin-coated aluminum plates, foreign matters such as coolant and aluminum powder are not generated in the manufacturing process, unlike DI cans, and the can barrel are coated with resin on both the outer surfaces and the inner surfaces. Therefore, there is no cleaning and drying step performed in the manufacturing of DI cans. Instead, the can barrels of the drawn and ironed resin-coated cans have distortion of resin, and heating (heating step) is performed in a heat-set oven D7 in order to remove the distortion.

### <Branch Conveyor>

The branch conveyor 2 is to separate and send the can barrels formed by the can barrel forming apparatus D0 (resin-coated can) to the printing apparatus inlet conveyor P0 side and the bypass inlet conveyor B0 side.

The base conveyor 22 at the base of the branch conveyor 2 is connected to the can barrel forming section D (resin-coated can). The first branch 23 of the branch conveyor 2 is connected to the printing apparatus inlet conveyor P0 connected to the printing apparatus P1, and the second branch 24 of the branch conveyor 2 is connected to the bypass inlet conveyor B0, which does not pass through the printing apparatus P1, and is connected to the plain can manufacturing section B (resin-coated can).

### <Printed Can Manufacturing Section (Resin-Coated Can)>

The printed can manufacturing section P (resin-coated can) for a resin-coated can is simpler than that for a DI can, and includes the printing apparatus P1, the varnisher P2 for applying varnish to printed surfaces, and the first curing oven P3 for drying coating materials. There is no need for the lubricator P6, as was necessary with for DI cans. This is because the printed cans of the resin-coated cans are coated with resin and varnish, and therefore, necking can be performed without using lubricant. The can barrels discharged from the printed can manufacturing section P (resin-coated can) are printed cans, and the route passing through the printed can manufacturing section P (resin-coated can) is the printed can route.

### <Plain Can Manufacturing Section (Resin-Coated Can)>

The plain can manufacturing section B (resin-coated can) directed toward the necking section N without passing through the printing apparatus P1 is simpler than that for DI cans.

Since the resin-coated cans are coated with resin, it is not necessary to apply varnish for protecting the outer surfaces of the can barrels. As illustrated in FIG. 3, the plain can manufacturing section B (resin-coated can) performs processing of the lubricator B6 on the formed can barrels and discharges the can barrels toward the necking apparatus N2. The lubricator B6 may be provided in the necking section N or the necking apparatus N2. The can barrels discharged from the plain can manufacturing section B (resin-coated can) are plain cans, and the route passing through the plain can manufacturing section B (resin-coated can) is the plain can route.

Note that the present invention does not preclude installation of any other apparatus, if necessary, facing the flow path of the plain can manufacturing section B (resin-coated can), but the printing apparatus P1 is not installed.

### <Summary of Example 1 and Example 2>

The can body manufacturing system 1 of the present invention can separate and cause the formed can barrels to flow to the printed can route ranging from the printing apparatus inlet conveyor P0 to the printed can manufacturing section P and to the plain can route ranging from the bypass inlet conveyor B0 to the plain can manufacturing section B, by the flow path switching unit 21.

In the printed can manufacturing section P of the related art, the manufacturing line has to be stopped while replacing the printing plates 44 for design change.

In the can body manufacturing system 1 of the present invention, the printed can route and the plain can route can be selected by the flow path switching unit 21, and even in a situation where the printed can manufacturing section P has to be stopped in order to replace the printing plates 44, plain cans can be manufactured during that time. In the can body manufacturing system 1 according to Examples 1 and 2, the operation rate is improved as compared to the related art.

### <Example 3>

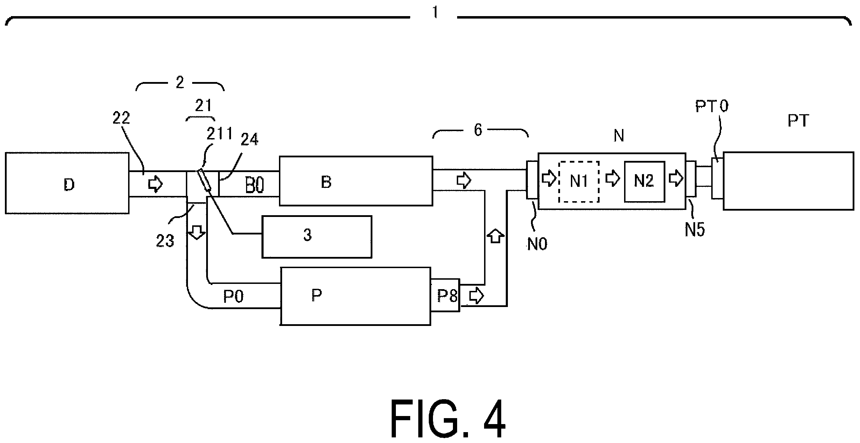

FIG. 4 is an explanatory diagram of the can body manufacturing system 1 according to Example 3. In Example 1 and Example 2, the can barrel forming apparatus D0 is shared, and the necking section N is provided at the terminal end of each of the printed can manufacturing section P and the plain can manufacturing section B. Example 3 is an example in which not only the can barrel forming apparatus D0 but also the necking section N is shared.

Therefore, in the can body manufacturing system 1 according to Example 3, the respective apparatuses installed in the can barrel forming section D, the printed can manufacturing section P, and the plain can manufacturing section B are the same as those in Example 1 (FIG. 1) when manufacturing DI cans, and are the same as those in Example 2 (FIG. 3) when manufacturing resin-coated cans. However, in the can body manufacturing system 1 according to Example 3, the inner surface coaters P4 and B4 and the second curing ovens P5 and B5 may be installed between a merge conveyor 6 and the necking apparatus N2. Specifically, these apparatuses may be provided in the necking section N. As such, except that the printed can manufacturing section P necessarily requires the printing apparatus P1 and the plain can manufacturing section B is not provided with the printing apparatus P1, the positions of the other apparatuses can be changed in accordance with the type of cans to be manufactured.

The branch conveyor 2 is controlled by a controller 3, and the controller 3 moves a movable guide (switching device) 211 of the flow path switching unit 21 to distribute can barrels to the first branch 23 and the second branch 24.

The first branch 23 is connected to the printing apparatus inlet conveyor P0, i.e., the printed can manufacturing section P, and can barrels passing through the printed can route are printed and then sent out from the printing apparatus outlet conveyor P8 toward the merge conveyor 6. The second branch 24 is connected to the bypass inlet conveyor B0, i.e., the plain can manufacturing section B, and can barrels passing through the plain can route are not printed but varnished on their outer surfaces and are sent out toward the merge conveyor 6.

The merge conveyor 6 is a conveyor for merging the printed can manufacturing section P and the plain can manufacturing section B into one at the outlets thereof. The can barrels coming out of the merge conveyor 6 is sent to a necking inlet conveyor N0. During a normal operation, only one of the printed cans and the plain cans is manufactured by selecting the branch by the movable guide (switching device) 211, so the printed cans and the plain cans are not mixed by the merge conveyor 6.

In addition, in Example 1, the lubricators P6 and B6 are provided on the printed can manufacturing section P and the plain can manufacturing section B. In Example 3, neither the printed can manufacturing section P nor the plain can manufacturing section B is provided with the lubricators P6 and B6.

Instead, a lubricator N1 is provided in the necking section N, and the controller 3 performs control so that the lubricator N1 operates only for can barrels (for example, DI cans or plain cans such as resin-coated cans) to which lubricant needs to be applied at the time of necking. The lubricator N1 may be installed in the necking apparatus N2, or may be installed in the plain can manufacturing section B (B6) when the can body manufacturing system 1 is dedicated to resin-coated cans.

Then, the can barrels are necked by the necking apparatus N2, discharged from a necking outlet conveyor N5, and sent toward a palletizer inlet conveyor PT0.

A palletizer section PT is an apparatus for arranging and stacking manufactured can barrels on a pallet. The stacked can barrels are moved to a storage place by a forklift or the like.

According to the configuration of Example 3, the can barrel forming apparatus D0, the necking section N, and the palletizer section P are shared, and can barrels of both printed cans and plain cans can be manufactured. FIG. 4 illustrates an example in which one necking apparatus N2 is provided, but a plurality of necking apparatuses N2 may be provided.

In Example 3, the apparatuses used in a part of the manufacturing process are shared, so that printed cans and plain cans can be manufactured by one can body manufacturing system 1. The can body manufacturing system 1 becomes compact, and the present invention can contribute to reduction in cost.

### <Exampled 4>

### <Can Barrel Detection Sensor>

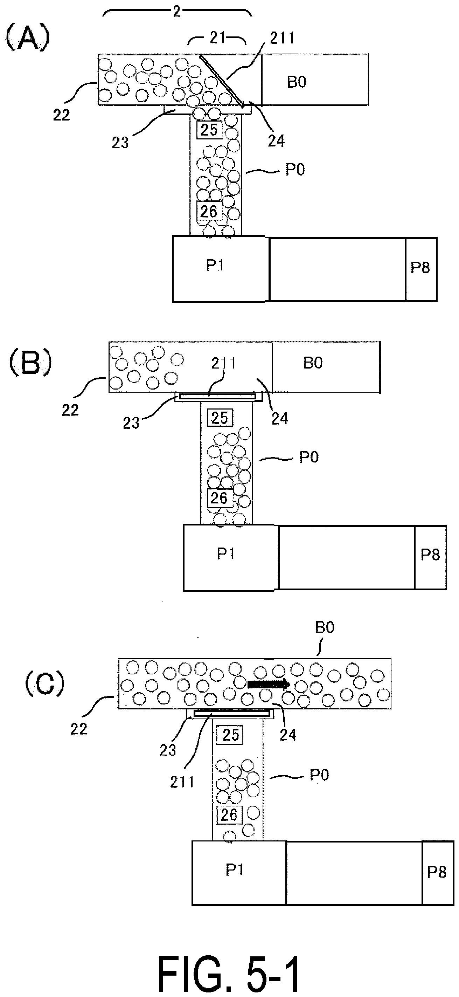

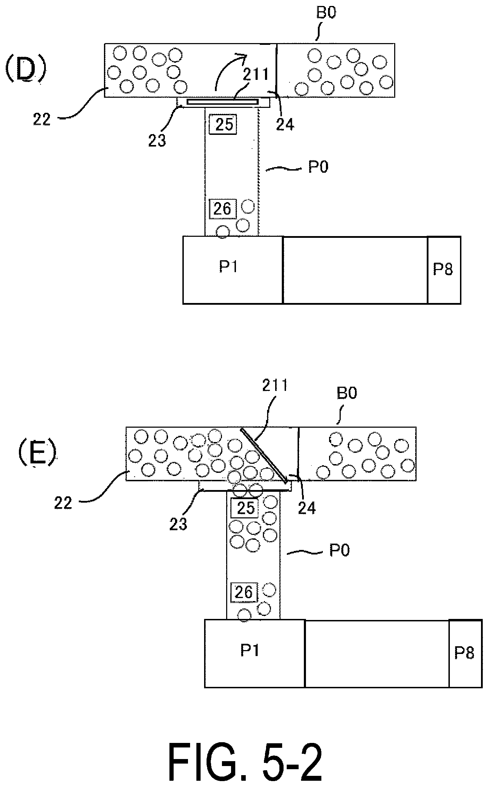

As illustrated in FIGS. 5-1 and 5-2, an upstream-side can barrel detection sensor 25 and a downstream-side can barrel detection sensor 26 are attached to the printing apparatus inlet conveyor P0 of Example 4. Both the can barrel detection sensors 25 and 26 are sensors for detecting passing of the can barrels, and are sensors that output signals when the can barrels are at positions of the sensors 25 and 26) and do not output a signal when the can barrels are not present. When the can barrels are fed without any gap, both the can barrel detection sensors 25 and 26 continue to output signals. When the can barrels are fed sparsely, both the can barrel detection sensors 25 and 26 repeat ON/OFF of signals. When the can barrels are not fed, neither of the can barrel detection sensors 25 or 26 output a signal.

### <Switching from Manufacturing of Printed Cans to Manufacturing of Plain Cans and Test Printing>

FIGS. 5-1 and 5-2 are explanatory diagrams of switching by the movable guide (switching device) 211 of the branch conveyor 2. FIGS. 5-1 and 5-2 illustrate movement of the movable guide (switching device) 211 and movement of conveyors or the like when switching from manufacturing of printed cans to manufacturing of plain cans.

FIG. 5-1(A) illustrates a state in which printed cans are being manufactured, and the movable guide (switching device) 211 is placed at a position where formed can barrels are caused to flow to the first branch 23. The base conveyor 22 of the branch conveyor 2 is in operation and sends the can barrels to the printing apparatus inlet conveyor P0 that is also in operation.

A first phase of the switching step starts with stopping the base conveyor 22 of the branch conveyor 2. At this time, the conveyors or the like of the printed can manufacturing section P are in operation and continue to manufacture printed cans. After a while, the can barrels on the printing apparatus inlet conveyor P0 gradually decrease, and the upstream-side can barrel detection sensor 25 at the beginning end portion of the printing apparatus inlet conveyor P0 no longer detects the can barrels. (Note that at this time, the downstream-side can barrel detection sensor 26 continues to detect the can barrels.)

The controller 3 determines this timing and drives the movable guide (switching device) 211 to close the first branch 23. FIG. 5-1(B) illustrates a state at this time.

When the movable guide (switching device) 211 closes the first branch 23, the controller 3 operates the conveyors or the like in the printed can manufacturing section P for a while so that any can barrel in the middle of printing does not remain on the printed can manufacturing section P, particularly on the printing apparatus P1, and then stops the conveyors or the like.

The controller 3 then drives the base conveyor 22 and the bypass inlet conveyor B0 to start the manufacturing of plain cans.

The printing apparatus inlet conveyor P0 is configured so that a large number of can barrels can be retained thereon, and therefore a considerable amount of can barrels are retained even when the manufacturing of plain cans is started. The retained can barrels are used for test printing when starting printing.

This state is illustrated in FIG. 5-1(C).

It is common for an operator to stop manufacturing printed cans in order to change a design to be printed on the outer surface of the can barrels. In such a case, the operator can efficiently use the can body manufacturing system 1 without stopping the same by switching a route from the printed can route where the printed can manufacturing section P is present to the plain can route where the plain can manufacturing section B is present.

While the printing apparatus P1 is stopped, the operator changes the printing plate 44 and performs test printing. The can barrels retained on the printing apparatus inlet conveyor P0 are used for test printing. The test-printed cans are removed from the printed can manufacturing section P. This prevents the plain cans and the test-printed cans from being mixed.

The test printing may be performed several times. In this case, since there is a possibility that the can barrels retained on the printing apparatus inlet conveyor P0 run out, can barrels for test printing are replenished to the printing apparatus inlet conveyor P0.

When neither the upstream-side can barrel detection sensor 25 nor the downstream-side can barrel detection sensor 26 detect can barrels, the controller 3 determines that there are not sufficient can barrels for test printing on the printing apparatus inlet conveyor P0. FIG. 5-2(D) illustrates this state.

Then, the controller 3 temporarily opens the movable guide (switching device) 211 to cause the can barrels to flow from the first branch 23 to the printing apparatus inlet conveyor P0 side. FIG. 5-2(E) illustrates this state. As a result, the can barrels for test printing are replenished to the printing apparatus inlet conveyor P0.

When both the upstream-side can barrel detection sensor 25 and the downstream-side can barrel detection sensor 26 detect can barrels, the controller 3 determines that a sufficient amount of can barrels are stored on the printing apparatus inlet conveyor P0, and moves the movable guide (switching device) 211 to send the can barrels to the plain can manufacturing section B side. Again, the flow of can barrels returns to FIG. 5-1(C), and the manufacturing of plain cans continues on the plain can route.

When the test printing is finished, the operator can move the movable guide (switching device) 211 in order to start the manufacturing of printed cans. The flow of can barrels is as illustrated in FIG. 5-1(A) and is directed toward the printing apparatus inlet conveyor P0 side. The conveyors and apparatuses on the plain can manufacturing section B are stopped, and the manufacturing of printed cans is resumed.

In Example 4, by switching the production of can barrels to the manufacturing of plain cans, maintenance of the printing apparatus P1 and replacement of the printing plates 44 can be performed without stopping the can body manufacturing system 1. As such, the can body manufacturing system 1 according to Example 4 can be used as a system with high productivity.

### <Example 5>

Example 5 is an example in which the movable guide (switching device) 211 of Example 4 is not used in the flow path switching unit 21 of the branch conveyor 2.

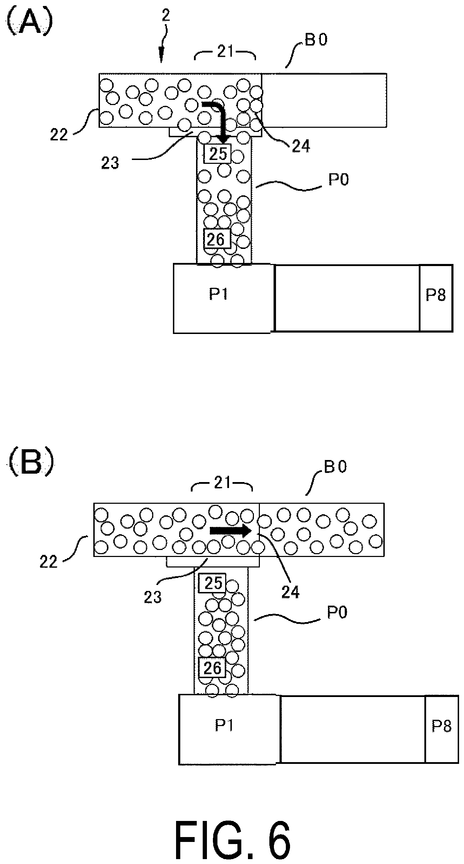

FIG. 6 is an explanatory diagram of branch switching by conveying speed control of the branch conveyor 2. FIG. 6(A) illustrates a state in which can barrels are caused to flow from the first branch 23 of the branch conveyor 2 toward the printing apparatus inlet conveyor P0. When manufacturing printed cans, the base conveyor 22 of the branch conveyor 2 and the printing apparatus inlet conveyor P0 are driven, and the bypass inlet conveyor B0 is stopped.

FIG. 6(B) illustrates a state in which the manufacturing of printed cans is switched to the manufacturing of plain cans. The controller 3 controls a conveying speed of the printing apparatus inlet conveyor P0 and stops the printing apparatus inlet conveyor P0. At the same time, the controller 3 controls the conveying speed so as to move the other conveyor of the printed can manufacturing section P. Thus, there is no can barrel left in the printed can manufacturing section P. Thereafter, the controller 3 drives the bypass inlet conveyor B0 to cause the can barrels to flow from the second branch 24 toward the plain can manufacturing section B.

As described above, even when the movable guide (switching device) 211 is not provided, the operator can cause the can barrels to flow toward the first branch 23 or the second branch 24 by the conveying speed or on/off of the conveyor.

Note that in the above example, the switching step is performed by the controller 3. The present invention also includes a case where the operator operates the flow path switching unit 21.

### <Conveying Speed Control During Test Printing>

As described above, the test printing may be performed several times, and the can barrels retained on the printing apparatus inlet conveyor P0 may run out.

Although the movable guide (switching device) 211 is moved in Example 4 in order to replenish the can barrels for test printing to the printing apparatus inlet conveyor P0, the replenishment can be performed by conveying speed control in Example 5.

As illustrated in FIG. 6, the branch conveyor 2 according to Example 5 does not have the movable guide (switching device) 211. When replenishing the can barrels for test printing to the printing apparatus inlet conveyor P0, the state illustrated in FIG. 6(B) may be temporarily returned to the state illustrated in FIG. 6(A), but as another example, the controller 3 performs conveying speed control so that the conveyance of the bypass inlet conveyor B0 is performed more slowly than normal. At this time, the branch conveyor 2 is maintained at a normal speed. At the same time or before or after that, the controller 3 controls the conveying speed of the printing apparatus inlet conveyor P0 so that some of the can barrels retained on the flow path switching unit 21 flows toward the printing apparatus inlet conveyor P0. If the conveying speed of the bypass inlet conveyor B0 is too high, it becomes difficult for the can barrels to flow toward the printing apparatus inlet conveyor P0 side, and if the conveying speed of the bypass inlet conveyor B0 is too low, the manufacturing of plain cans that are produced through the plain can manufacturing section B is interrupted. At this time, the bypass inlet conveyor B0 and the printing apparatus inlet conveyor P0 are subjected to conveying speed control by the controller 3 so as not to affect the manufacturing of plain cans.

### <Example 6>

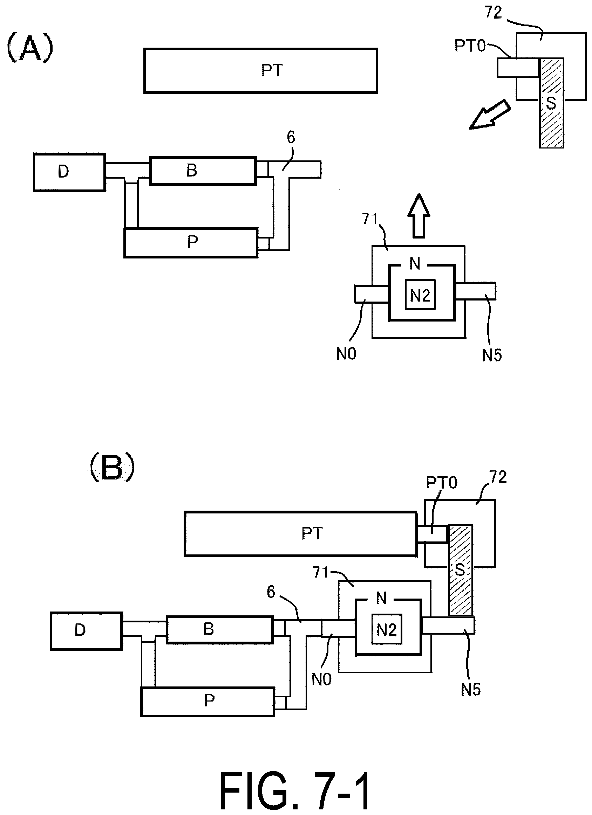

Example 6 relates to assembly and arrangement of the necking section N and the palletizer section PT. FIG. 7-1 is an explanatory diagram of assembly of the can body manufacturing system, and FIG. 7-1(A) is an explanatory diagram illustrating a state of the can body manufacturing system 1 before assembly.

The can barrel forming section D, the printed can manufacturing section P, and the plain can manufacturing section B are unitized, respectively. For example, there are a cupping pressing machine unit, a body maker unit, a printing apparatus unit, and the like.

In addition, in the necking section N, a necking section cradle 71 and the necking apparatus N2 are formed as a unit. Further, the necking section cradle 71 has a necking outlet conveyor N5. The necking section cradle 71 is a module that can move together with the necking outlet conveyor N5, facilitating assembly of the can body manufacturing system 1.

Further, a connecting conveyor cradle 72 includes a connecting conveyor S and a palletizer inlet conveyor PT0, and is a module that can move together with the connecting conveyor S and the palletizer inlet conveyor PT0. One of the connecting conveyor S and the palletizer inlet conveyor PT0 may be provided in the connecting conveyor cradle 72.

The palletizer section PT is a unit including the palletizer section PT. The palletizer section PT may further include the palletizer inlet conveyor PT0.

FIG. 7-1(B) is an explanatory diagram in which the palletizer section PT and the necking section N are arranged in parallel. The units and modules initially placed separately as illustrated in FIG. 7-1(A) are assembled by moving them in the directions of the arrows to form the can body manufacturing system 1 in parallel arrangement.

The necking section cradle 71 is moved such that the necking inlet conveyor N0 and the merge conveyor 6 are connected. The connecting conveyor cradle 72 is then moved such that the connecting conveyor S and the necking outlet conveyor N5 are connected. Then, the palletizer inlet conveyor PT0 provided on the connecting conveyor cradle 72 is connected to the palletizer section PT, so that a route for sending can barrels from the necking section N to the palletizer section PT is completed.

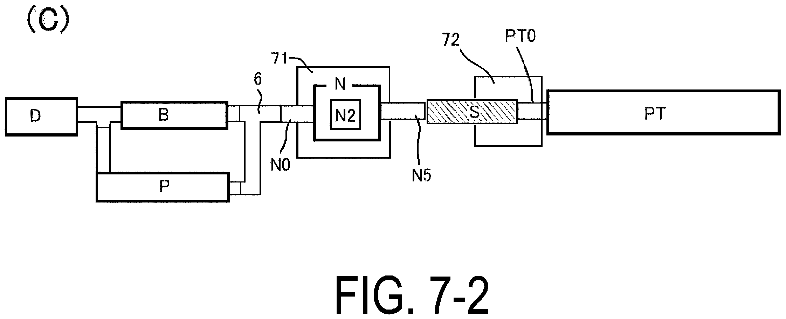

FIG. 7-2(C) is an explanatory diagram of the can body manufacturing system 1 in series arrangement. The respective units are arranged in series. Since the necking section cradle 71 and the connecting conveyor cradle 72 can move together with the necking outlet conveyor N5, the connecting conveyor S, and the palletizer inlet conveyor PT0, assembly is facilitated. In addition, since the parallel arrangement and the series arrangement can be selected in accordance with a space of an installation place, the layout can be easily changed.

### <Example 7>

As illustrated in FIGS. 1 and 3, Example 7 is an aspect in which the necking apparatus N2 is arranged in each of the plain can manufacturing section B and the printed can manufacturing section P. An inlet and an outlet of the necking apparatus N2 are connected to the necking inlet conveyor N0 and the necking outlet conveyor N5, respectively. The necking inlet conveyor N0 can be connected to the printing apparatus outlet conveyor N2 by moving the necking apparatus P8. In addition, the necking inlet conveyor N0 can be connected to the plain can manufacturing section B by moving the necking apparatus N2. Since the necking section cradle 71 illustrated in FIGS. 1 and 3 is a module that can be moved together with the necking outlet conveyor N5, the connection and assembly operation is simple.

### <Example 8>

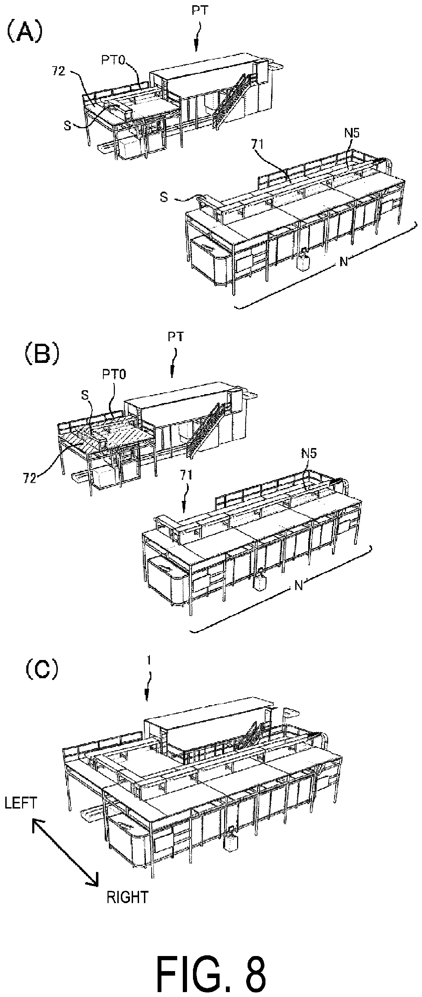

FIG. 8 is an explanatory diagram of a three-dimensional parallel arrangement of the necking section N and the palletizer section P T of the can body manufacturing system 1.

FIG. 8(A) is an explanatory view of the can body manufacturing system 1 before assembly, and FIG. 8(B) is an explanatory view in which the connecting conveyor cradle 72 is hatched.

The necking section N is located below the necking section cradle 71. The necking section cradle 71 has the necking outlet conveyor N5. The connecting conveyor S is provided on each of the connecting conveyor cradle 72 and the necking section cradle 71. The connecting conveyor cradle 72 and the necking section cradle 71 are modules that can move together with the necking outlet conveyor N5, the connecting conveyor S, and the palletizer inlet conveyor PT0.

The connecting conveyor S may be provided on either the connecting conveyor cradle 72 or the necking section cradle 71 and extend in cantilever fashion to the other. In addition, the palletizer inlet conveyor PT0 may be attached to the palletizer section PT.

In the palletizer section PT of FIGS. 8(A) and 8(B), the palletizer inlet conveyor PT0 and the connecting conveyor S of the connecting conveyor cradle 72 have already been connected and assembled for the sake of explanation.

FIG. 8(C) illustrates a state in which the necking section N and the palletizer section PT are three dimensionally arranged in parallel. The palletizer inlet conveyor PT0 is connected to the connecting conveyor S provided on the connecting conveyor cradle 72. The connecting conveyor S is further connected to the connecting conveyor S of the necking section cradle 71. In the assembled can body manufacturing system 1, the palletizer section PT is located on a second floor and is arranged so as to be shifted from the other apparatuses in the left-right direction, that is, three dimensionally arranged in parallel. Specifically, the palletizer section PT and a part of the necking outlet conveyor N5 are provided at the second floor portion. In addition, the palletizer section PT is shifted to the right and left in a plan view from the other apparatus group except the palletizer section PT installed at a first floor portion. The first floor portion immediately below the palletizer section PT is an empty space. The space can be effectively utilized by arranging some apparatuses as necessary. In addition, the space may be used for arranging a conveyor or the like that conveys the can barrels stacked in the palletizer section PT to an accumulation area.

As described above, the can body manufacturing system 1 according to Example 8 can be three dimensionally arranged, and the connecting conveyor cradle 72 and the necking section cradle 71 are modules that can move together with the necking outlet conveyor N5, the connecting conveyor S, and the palletizer inlet conveyor PT0 provided on each cradle. Therefore, it is easy to assemble the components of the can body manufacturing system 1 and to change the positions thereof. In addition, the can body manufacturing system 1 according to Example 8 can reduce an installation area by being three dimensionally arranged, which can contribute to space saving.

### <Example 9>

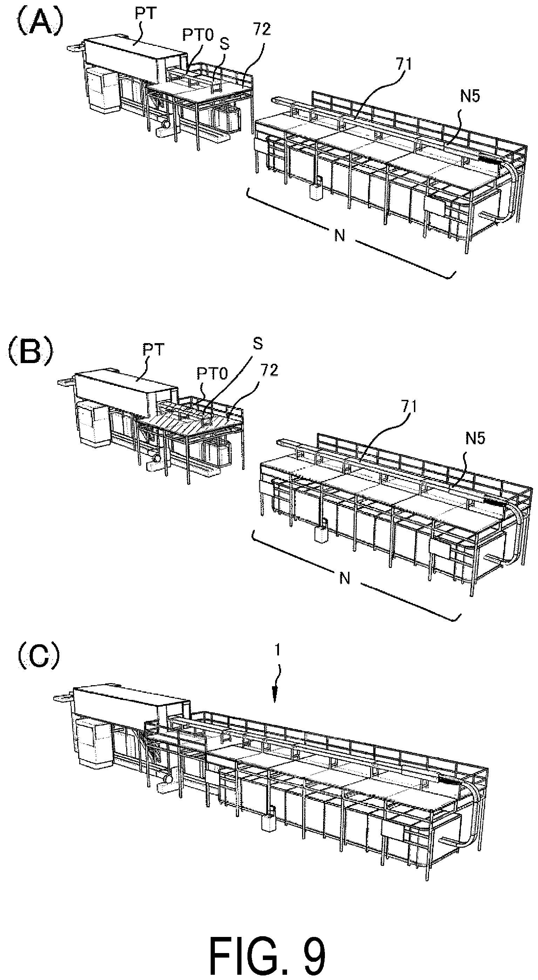

FIG. 9 is an explanatory diagram of a three-dimensional series arrangement of the necking section N and the palletizer section PT of the can body manufacturing system 1. FIG. 9(A) is an explanatory view of the can body manufacturing system 1 before assembly, and FIG. 9(B) is an explanatory view in which the connecting conveyor cradle 72 is hatched. FIG. 9(C) is an explanatory view after assembly.

Example 9 includes the same connecting conveyor cradle 72 as that of Example 8, and the necking section cradle 71 is the same as that of Example 8. While the can body manufacturing system 1 according to Example 8 has a three-dimensional parallel arrangement, the can body manufacturing system 1 according to Example 9 has an aspect in which the respective apparatuses constituting the can body manufacturing system 1 are arranged in series and three dimensionally at a part of the palletizer section PT.

In Example 9, the can body manufacturing system 1 can be housed in a very compact manner because the palletizer section PT is arranged directly above the other apparatuses on the first floor.

The parallel arrangement of FIG. 8 and the series arrangement of FIG. 9 can be selected in accordance with the space of the installation place, and the layout can be easily changed. Since the connecting conveyor cradle 72 and the necking section cradle 71 are modules that can move together with the necking outlet conveyor N5, the connecting conveyor S, and the palletizer inlet conveyor PT0 provided on each cradle, the can body manufacturing system 1 can be easily assembled.

Although the embodiments of the present invention have been described in detail with reference to the drawings, specific configurations are not limited to these embodiments, and design changes and the like within a range not departing from the gist of the present invention are also included in the present invention. Further, each of the above-described embodiments can be combined with each other by mutually using the technology of each of the embodiments, as long as there is no particular contradiction or problem in the purpose, configuration, and the like thereof.

### Reference Signs List

B: Plain can manufacturing section
B0: Bypass inlet conveyor
B2: Varnisher
B3: First curing oven
B4: Inner surface coater
B5: Second curing oven
B6: Lubricator
D: Can barrel forming section
D0: Can barrel forming apparatus
D1: Cupping pressing machine
D2: Body maker
D3: Trimmer
D4: Washer
D5: Oven
D7: Heat-set oven
N0: Necking inlet conveyor
N: Necking section
N1: Lubricator
N2: Necking apparatus
N5: Necking outlet conveyor
P0: Printing apparatus inlet conveyor
P: Printed can manufacturing section
P1: Printing apparatus
P2: Varnisher
P3: First curing oven
P4: Inner surface coater
P5: Second curing oven
P6: Lubricator
P8: Printing apparatus outlet conveyor
PT0: Palletizer inlet conveyor
PT: Palletizer section
S: Connecting conveyor
1: Can body manufacturing system
2: Branch conveyor (branch section)
21: Flow path switching unit
211: Movable guide (switching device)
22: Base conveyor
23: One (first) branch (printed can side)
24: Other (second) branch (plain can side)
25: Upstream-side can barrel detection sensor
26: Downstream-side can barrel detection sensor
3: Controller
41: Inking unit
42: Ink supplier
43: Plate cylinder
44: Printing plate
45: Blanket wheel
46: Conveying unit
47: Mandrel wheel
51: Transfer unit
6: Merge conveyor
71: Necking section cradle
72: Connecting conveyor cradle

## Claims

1. A can body manufacturing system comprising:
a can barrel forming apparatus,
a printing apparatus, and
a branch conveyor, wherein
the can barrel forming apparatus is an apparatus configured to form can barrels,
the printing apparatus is configured to perform printing on outer surfaces of the can barrels and includes a printing apparatus inlet conveyor,
the branch conveyor is arranged in a post-process of the can barrel forming apparatus and includes a flow path switching unit,
a first branch of the branch conveyor is connected to the printing apparatus inlet conveyor connected to the printing apparatus and is connected to a printed can manufacturing section,
a second branch of the branch conveyor is connected to a bypass inlet conveyor not passing through the printing apparatus and is connected to a plain can manufacturing section, and
printed cans manufactured by the printed can manufacturing section and plain cans without being printed manufactured by the plain can manufacturing section are producible by switching the flow path switching unit.

2. The can body manufacturing system according to claim 1, wherein
the flow path switching unit is a switching device,
the switching device includes a movable guide, and
the movable guide is configured to switch a flow path between the first branch and the second branch of the branch conveyor.

3. The can body manufacturing system according to claim 1, further comprising a controller, wherein
switching of the flow path by the flow path switching unit is performed using the controller controlling conveying speed of the printing apparatus inlet conveyor and controlling conveying speed of the bypass inlet conveyor.

4. The can body manufacturing system according to claim 1, wherein
the can barrel forming apparatus is a forming apparatus for a DI can or a resin-coated can.

5. The can body manufacturing system according to claim 1, wherein
the printing apparatus inlet conveyor is configured to retain formed can barrels thereon.

6. The can body manufacturing system according to claim 1, wherein
the printing apparatus inlet conveyor further includes a can barrel detection sensor and a controller,
the can barrel detection sensor is configured to detect an amount of can barrels on the printing apparatus inlet conveyor, and
the controller is configured to switch the flow path switching unit of the branch conveyor toward the printing apparatus inlet conveyor side when amount of can barrels on the printing apparatus inlet conveyor decreases during manufacturing of the plain cans.

7. The can body manufacturing system according to claim 1, further comprising:
a controller, and
a necking apparatus, wherein
a lubricator is provided in the necking apparatus or immediately in front of the necking apparatus, and
the controller is configured to control the lubricator such that lubricant is applied to DI cans or plain cans of resin-coated cans and lubricant is not applied to printed cans of resin-coated cans.

8. The can body manufacturing system according to claim 1, further comprising:
a necking apparatus,
a necking section cradle,
a palletizer section, and
a connecting conveyor cradle, wherein
the necking section cradle includes at least a necking outlet conveyor and is a module movable together,
the connecting conveyor cradle includes a connecting conveyor and/or a palletizer inlet conveyor, and is a module movable together, and
the connecting conveyor cradle connects the necking outlet conveyor and the palletizer section.

9. A can body manufacturing method comprising:
forming can barrels by a can barrel forming apparatus, wherein the can barrel forming apparatus, a printing apparatus, and a branch conveyor are included,
the can barrel forming apparatus being configured to form can barrels,
the printing apparatus being configured to perform printing on outer surfaces of can barrels and including a printing apparatus inlet conveyor,
the branch conveyor being arranged in a post-process of the can barrel forming apparatus and including a flow path switching unit,
a first branch of the branch conveyor being connected to the printing apparatus inlet conveyor connected to the printing apparatus and being connected to a printed can manufacturing section, and
a second branch of the branch conveyor being connected to a bypass inlet conveyor not passing through the printing apparatus and being connected to a plain can manufacturing section; and
switching the flow path switching unit to the first branch or the second branch, wherein
manufacturing of printed cans passing through the printed can manufacturing section by selection of the first branch and manufacturing of plain cans without printing passing through the plain can manufacturing section by selection of the second branch are performed by switching the flow path switching unit.
